# EUROPEAN PATENT APPLICATION

(11) **EP 4 318 712 A1**
(43) Date of publication of application: **07.02.2024**
(21) Application number: 22853549.8
(22) Date of filing: 05.08.2022
(51) Int. Cl.: H01M 10/0567, H01M 10/052

(54) **NON-AQUEOUS ELECTROLYTE CONTAINING ADDITIVE FOR NON-AQUEOUS ELECTROLYTE AND LITHIUM SECONDARY BATTERY COMPRISING SAME**

(30) Priority: 06.08.2021 KR 20210103601
(71) Applicant: LG ENERGY SOLUTION, LTD., Seoul 07335 (KR)
(72) Inventor: LEE, Jung Min, Daejeon 34122 (KR); LEE, Kyung Mi, Daejeon 34122 (KR); YEOM, Chul Eun, Daejeon 34122 (KR); HAN, Jung Gu, Daejeon 34122 (KR); LEE, Chul Haeng, Daejeon 34122 (KR)
(74) Representative: Hoffmann Eitle
(86) International application number: PCT/KR2022/011671
(87) International publication number: WO 2023/014174

(57) **Abstract**

The present invention provides a non-aqueous electrolyte including an additive for a non-aqueous electrolyte which is represented by Formula 1 below: 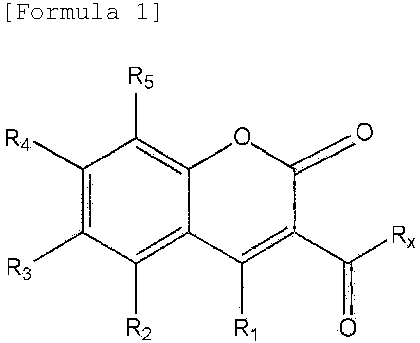 In Formula 1, R₁ to R₅ are each independently any one selected from the group consisting of hydrogen (H), an alkyl group having 1 to 10 carbon atoms, and an alkoxy group having 1 to 10 carbon atoms, and Rₓ may be an alkyl group having 1 to 10 carbon atoms which is substituted with at least one fluorine group or an alkoxy group having 1 to 10 carbon atoms which is substituted with at least one fluorine group.

## Description

### TECHNICAL FIELD

### [Cross-reference to Related Applications]

This application claims priority from Korean Patent Application No. 10-2021-0103601, filed on August 6, 2021, the disclosure of which is incorporated by reference herein.

### [Technical Field]

The present invention relates to a non-aqueous electrolyte including an additive for a non-aqueous electrolyte and a lithium secondary battery including the same.

### BACKGROUND ART

Recently, demand for a secondary battery having high stability as well as high capacity and high output is increasing as an application area of lithium secondary batteries is rapidly expanding not only to electricity, electronics, communication, and power supply of electronic devices such as computers, but also to power storage supply of automobiles or large-area devices such as power storage devices.

Particularly, high capacity, high output, and long-term life characteristics are becoming important in lithium secondary batteries for automotive applications. In order to increase capacity of the secondary battery, a nickel-rich positive electrode active material having high energy density but low stability may be used, or the secondary battery may be operated at a high voltage.

However, in a case in which the secondary battery is operated under the above conditions, transition metal ions may be dissolved from a surface of a positive electrode while an electrode surface structure or a film formed on the surface of the positive/negative electrode is degraded due to a side reaction caused by degradation of an electrolyte as charge and discharge proceed. As described above, since the dissolved transition metal ions degrade passivation ability of a solid electrolyte interphase (SEI) while being electro-deposited on the negative electrode, there occurs a problem in that the negative electrode is degraded.

Also, in the lithium secondary batteries for automotive applications, the high capacity, high output, and long-term life characteristics are important even at room temperature or in a low-temperature range. However, at the room temperature and in the low-temperature range where the temperature is decreased, there is a problem in that capacity characteristics and life characteristics are degraded because ion transport properties are deteriorated.

Thus, in order to solve this problem, research and development on a method capable of inhibiting the dissolution of the metal ions from the positive electrode and forming a low-resistance SEI film having high ion transport properties are being attempted.

### DISCLOSURE OF THE INVENTION

### TECHNICAL PROBLEM

An aspect of the present invention provides an additive for a non-aqueous electrolyte which may suppress degradation of a positive electrode, may reduce a side reaction between the positive electrode and the electrolyte, and may form a stable and low-resistance solid electrolyte interphase (SEI) film on a negative electrode.

Another aspect of the present invention provides a non-aqueous electrolyte in which life characteristics are improved by including the above additive for a non-aqueous electrolyte.

Another aspect of the present invention provides a lithium secondary battery in which overall performance is improved by improving storage characteristics and cycle characteristics by including the above non-aqueous electrolyte.

### TECHNICAL SOLUTION

According to an aspect of the present invention, there is provided a non-aqueous electrolyte including an additive for a non-aqueous electrolyte which is represented by Formula 1: 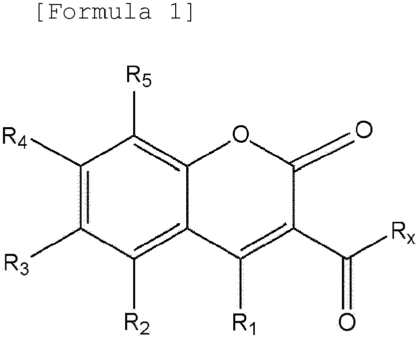 wherein, in Formula 1, R₁ to R₅ are each independently any one selected from the group consisting of hydrogen (H), an alkyl group having 1 to 10 carbon atoms, and an alkoxy group having 1 to 10 carbon atoms, and Rₓ may be an alkyl group having 1 to 10 carbon atoms which is substituted with at least one fluorine group or an alkoxy group having 1 to 10 carbon atoms which is substituted with at least one fluorine group.

According to another aspect of the present invention, there is provided a lithium secondary battery including the non-aqueous electrolyte.

### ADVANTAGEOUS EFFECTS

A compound represented by Formula 1, which is provided as an additive for a non-aqueous electrolyte of the present invention, is a compound based on a coumarin structure, wherein it may form a stable SEI (Solid Electrolyte Interphase) film on a surface of a negative electrode while being rapidly reductively decomposed during charge and discharge, and the film formed in this case may have low resistance characteristics. Since ion transport properties are deteriorated at room temperature and in a low-temperature range, a resistance state of the film becomes a factor determining lifetime or capacity performance, wherein roomtemperature/low-temperature characteristics may be improved when the additive for a non-aqueous electrolyte of the present invention, which forms a relatively low-resistance film, is used.

Also, the compound represented by Formula 1, which is provided as the additive for a non-aqueous electrolyte of the present invention, may form a film rich in inorganic substances, such as LiF, on the positive/negative electrode by including an alkyl group or an alkoxy group, which is substituted with at least one fluorine group, in addition to the coumarin structure. As a result, there is an effect of suppressing degradation due to an interfacial reaction.

Thus, since an electrode-electrolyte interface having low resistance may be formed if the non-aqueous electrolyte of the present invention including the compound of Formula 1 is used, a lithium secondary battery having improved storage characteristics at low temperature and room temperature, resistance characteristics, and cycle characteristics may be achieved.

### MODE FOR CARRYING OUT THE INVENTION

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

It will be further understood that the terms "include," "comprise," or "have" in this specification specify the presence of stated features, numbers, steps, elements, or combinations thereof, but do not preclude the presence or addition of one or more other features, numbers, steps, elements, or combinations thereof.

Also, the expressions "a" and "b" in the description of "a to b carbon atoms" in the present specification each denote the number of carbon atoms included in a specific functional group. That is, the functional group may include "a" to "b" carbon atoms. For example, the expression "alkylene group having 1 to 5 carbon atoms" denotes an alkylene group including 1 to 5 carbon atoms, that is, -CH₂-, -CH₂CH₂-, - CH₂CH₂CH₂-, -CH₂CH(CH₃)-, -CH(CH₃)CH₂-, and -CH(CH₃)CH₂CH₂-. Furthermore, an alkyl group in the present specification may be substituted or unsubstituted. Unless otherwise defined, the expression "substitution" denotes that at least one hydrogen bonded to carbon is substituted with an element other than hydrogen, for example, an alkyl group having 1 to 20 carbon atoms, an alkenyl group having 2 to 20 carbon atoms, an alkynyl group having 2 to 20 carbon atoms, an alkoxy group having 1 to 20 carbon atoms, a cycloalkyl group having 3 to 12 carbon atoms, a cycloalkenyl group having 3 to 12 carbon atoms, a heterocycloalkyl group having 3 to 12 carbon atoms, a heterocycloalkenyl group having 3 to 12 carbon atoms, an aryloxy group having 6 to 12 carbon atoms, a halogen atom, a fluoroalkyl group having 1 to 20 carbon atoms, a nitro group, a nitrile group, an aryl group having 6 to 20 carbon atoms, a heteroaryl group having 2 to 20 carbon atoms, or a haloaryl group having 6 to 20 carbon atoms.

Hereinafter, the present invention will be described in more detail.

### Non-aqueous Electrolyte

A non-aqueous electrolyte according to an embodiment of the present invention includes a compound represented by Formula 1 below as an additive. The compound of Formula 1 below is a compound based on a coumarin structure, wherein it may form a stable SEI (Solid Electrolyte Interphase) film on a surface of a negative electrode while being rapidly reductively decomposed during charge and discharge, and the film formed in this case may have low resistance characteristics.

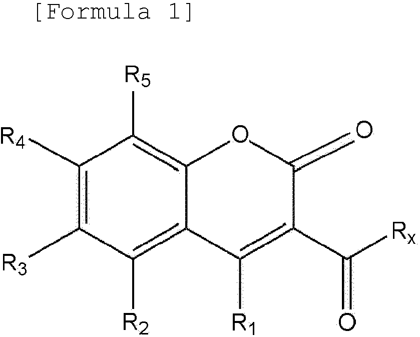

In Formula 1, R₁ to R₅ may each independently be any one selected from the group consisting of hydrogen (H), an alkyl group having 1 to 10 carbon atoms, and an alkoxy group having 1 to 10 carbon atoms, may be preferably any one selected from the group consisting of H, an alkyl group having 1 to 5 carbon atoms, and an alkoxy group having 1 to 5 carbon atoms, and may be more preferably H.

In Formula 1, Rₓ may be an alkyl group having 1 to 10 carbon atoms which is substituted with at least one fluorine group or an alkoxy group having 1 to 10 carbon atoms which is substituted with at least one fluorine group. A dense film may be formed on an electrode by including the alkyl group or the alkoxy group, which is substituted with a fluorine group, in addition to the coumarin structure, and, as a result, there is an effect of suppressing degradation due to an interfacial reaction.

Preferably, in Formula 1, Rₓ may be CF₃ and an alkyl group or alkoxy group substituted with CF₃. Specifically, Rₓ may be any one selected from CF₃, an alkyl group having 1 to 9 carbon atoms which is substituted with CF₃, OCF₃, and an alkoxy group having 1 to 9 carbon atoms which is substituted with CF₃. When substituted with CF₃, since a film rich in inorganic substances, such as LiF, is formed on the positive/negative electrode, there is an effect of suppressing the degradation due to the interfacial reaction.

Most preferably, Rₓ in Formula 1 may be any one selected from CF₃ and an alkyl group having 1 to 4 carbon atoms which is substituted with CF₃.

Specifically, the compound represented by Formula 1 of the present invention may be a compound represented by Formula 1-1 below.

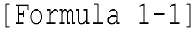

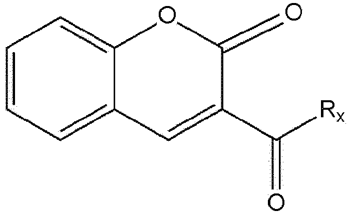

In Formula 1-1, Rₓ may be an alkyl group having 1 to 10 carbon atoms which is substituted with at least one fluorine group or an alkoxy group having 1 to 10 carbon atoms which is substituted with at least one fluorine group. A dense film may be formed on the electrode by including the alkyl group or the alkoxy group, which is substituted with a fluorine group, in addition to the coumarin structure, and, as a result, there is an effect of suppressing the degradation due to the interfacial reaction. Preferably, in Formula 1-1, Rₓ may be any one selected from CF₃, an alkyl group having 1 to 9 carbon atoms which is substituted with CF₃, and an alkoxy group having 1 to 9 carbon atoms which is substituted with CF₃. Most preferably, Rₓ in Formula 1-1 may be any one selected from CF₃ and an alkyl group having 1 to 4 carbon atoms which is substituted with CF₃. When substituted with CF₃, since a film rich in inorganic substances, such as LiF, is formed on the positive/negative electrode, there is an effect of suppressing the degradation due to the interfacial reaction.

Specifically, the compound represented by Formula 1 of the present invention may be any one of compounds represented by Formulae 2-1 to 2-7 below.

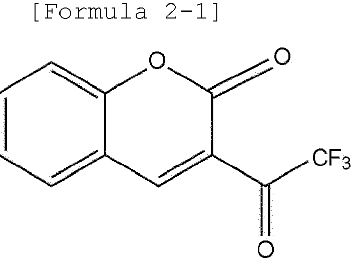

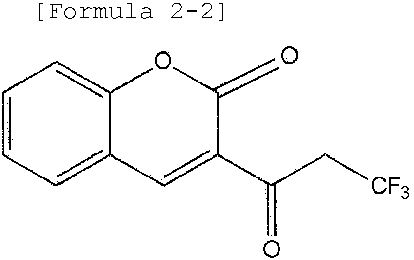

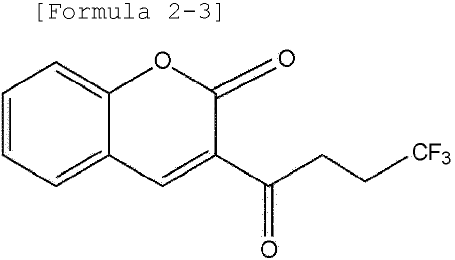

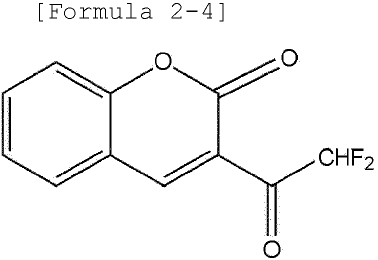

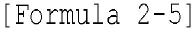

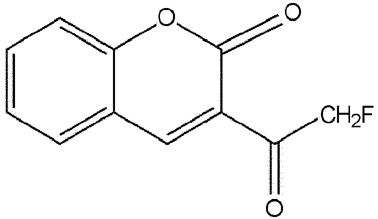

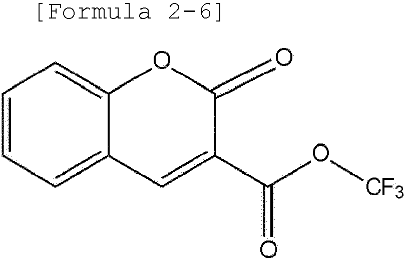

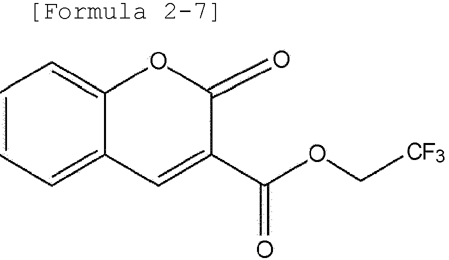

In the present invention, the additive for a non-aqueous electrolyte may be included in an amount of 0.01 part by weight to 3 parts by weight, preferably 0.1 part by weight to 2 parts by weight, and more preferably 0.5 part by weight to 1.0 part by weight based on 100 parts by weight of the non-aqueous electrolyte. If the amount of the compound represented by Formula 1 is less than 0.01 part by weight, since an effect of forming the positive/negative electrode film may be insignificant as operating time increases, an effect of inhibiting dissolution of transition metal may be reduced. Also, if the amount of the compound represented by Formula 1 is greater than 3 parts by weight, since viscosity of the electrolyte is not only increased due to the excessive amount of the additive, but ionic conductivity is also decreased due to the increase in viscosity to adversely affect mobility of ions in a battery, rate capability or life characteristics may be degraded. In addition, due to decomposition of the excessive additive, battery resistance may be increased, and side reaction and by-product may be caused.

The non-aqueous electrolyte according to the present invention may further include a lithium salt, an organic solvent, and optionally other electrolyte additives.

The lithium salt is used as an electrolyte salt in a lithium secondary battery, wherein it is used as a medium for transferring ions. Typically, the lithium salt, for example, may include Li⁺ as a cation, and may include at least one selected from the group consisting of F-, Cl-, Br⁻, I-, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻, and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis (fluorosulfonyl)imide;LiFSI), LiN(SO₂CF₂CF₃)₂ (lithium bis(perfluoroethanesulfonyl)imide;LiBETI), and LiN(SO₂CF₃)₂(lithium bis (trifluoromethanesulfonyl)imide;LiTFSI) or a mixture of two or more thereof. In addition to these materials, a lithium salt typically used in an electrolyte of a lithium secondary battery may be used without limitation.

The lithium salt may be appropriately changed in a normally usable range, but may be included in a concentration of 0.5 M to 5.0 M, preferably 0.8M to 2.5M, and more preferably 1.0M to 2.0Min the electrolyte to obtain an optimum effect of forming a film for preventing corrosion of the surface of the electrode. If the concentration of the lithium salt is less than 0.5 M, since an amount of lithium is insufficient, capacity and cycle characteristics of the lithium secondary battery are poor, and, if the concentration of the lithium salt is greater than 5.0 M, there may be a problem in that impregnability of the electrolyte is reduced due to an increase in the viscosity of the non-aqueous electrolyte, ionic conductivity is decreased, and the battery resistance is increased.

The non-aqueous organic solvent may include at least one organic solvent selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixed organic solvent thereof.

The cyclic carbonate-based organic solvent is an organic solvent which may well dissociate the lithium salt in the electrolyte due to high permittivity as a highly viscous organic solvent, wherein specific examples of the cyclic carbonate-based organic solvent may be at least one organic solvent selected from the group consisting of ethylene carbonate (EC),propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include ethylene carbonate.

Also, the linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based organic solvent may specifically include ethyl methyl carbonate (EMC).

Furthermore, the organic solvent may further include at least one ester-based organic solvent selected from the group consisting of a linear ester-based organic solvent and a cyclic ester-based organic solvent in at least one carbonate-based organic solvent selected from the group consisting of the cyclic carbonate-based organic solvent and the linear carbonate-based organic solvent to prepare an electrolyte having high ionic conductivity.

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

Also, the cyclic ester-based organic solvent may include at least one organic solvent selected from the group consisting of γ-butyrolactone, γ-valerolactone, γ-caprolactone, σ-valerolactone, and ε-caprolactone.

The organic solvent may be used by adding an organic solvent typically used in a non-aqueous electrolyte without limitation, if necessary. For example, the organic solvent may further include at least one organic solvent selected from an ether-based organic solvent, a glyme-based solvent, and a nitrile-based organic solvent.

As the ether-based solvent, any one selected from the group consisting of dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent as well as less reactivity with metal, wherein the glyme-based solvent may include at least one selected from the group consisting of dimethoxyethane (glyme, DME), diethoxyethane, diglyme, tri-glyme (triglyme), and tetra-glyme (TEGDME), but is not limited thereto.

The nitrile-based solvent may be at least one selected from the group consisting of acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile,difluorobenzonitrile, trifluorobenzonitrile, phenylacetonitrile, 2-fluorophenylacetonitrile, and 4-fluorophenylacetonitrile, but is not limited thereto.

Also, the non-aqueous electrolyte of the present invention may further include a known electrolyte additive in the non-aqueous electrolyte, if necessary, in order to prevent the occurrence of collapse of the negative electrode due to decomposition of the non-aqueous electrolyte in a high output environment or to further improve low-temperature high rate discharge characteristics, high-temperature stability, overcharge prevention, and an effect of suppressing battery swelling at high temperature.

Typical examples of the other electrolyte additives may include at least one additive for forming a SEI film which is selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may include vinylene carbonate (VC) or vinyl ethylene carbonate.

The halogen-substituted carbonate-based compound may include fluoroethylene carbonate (FEC).

The sultone-based compound may include at least one compound selected from the group consisting of1,3-propane sultone (PS),1,4-butane sultone, ethane sultone, 1,3-propene sultone (PRS), 1,4-butene sultone, and 1-methyl-1,3-propenesultone.

The sulfate-based compound may include ethylene sulfate (Esa), trimethylene sulfate (TMS), or methyl trimethylene sulfate (MTMS).

The phosphate-based compound may include at least one compound selected from the group consisting of lithium difluoro(bisoxalato)phosphate, lithium difluorophosphate,tetramethyl trimethyl silyl phosphate, trimethyl silyl phosphite,tris(2,2,2-trifluoroethyl)phosphate, and tris(trifluoroethyl)phosphite.

The borate-based compound may include tetraphenylborate, lithium oxalyldifluoroborate (LiODFB), and lithium bis(oxalato)borate (LiB(C₂O₄)₂, LiBOB).

The nitrile-based compound may include at least one compound selected from the group consisting of succinonitrile, adiponitrile, acetonitrile, propionitrile, butyronitrile, valeronitrile, caprylonitrile, heptanenitrile, cyclopentanecarbonitrile, cyclohexanecarbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte, wherein the lithium salt-based compound may include lithium difluorophosphate (LiDFP),LiPO₂F₂, or LiBF₄.

In a case in which, among these other electrolyte additives, a combination of vinylene carbonate (VC),1,3-propane sultone (PS), ethylene sulfate (Esa), and lithium difluorophosphate (LiDFP)is additionally included, a more robust SEI film may be formed on the surface of the negative electrode during an initial activation process of the secondary battery, and high-temperature stability of the secondary battery may be improved by suppressing generation of a gas which may be generated due to the decomposition of the electrolyte at high temperature.

Two or more other electrolyte additives may be mixed and used, and the additives may be included in an amount of 0.01 wt% to 20 wt%, particularly 0.01 wt% to 10 wt%, and preferably 0.05 wt% to 5 wt% based on a total weight of the non-aqueous electrolyte. If the amount of the other electrolyte additives is less than 0.01 wt%, effects of improving high-temperature storage characteristics and high-temperature life characteristics of the battery are insignificant, and, if the amount of the other electrolyte additives is greater than 20 wt%, there is a possibility that a side reaction in the electrolyte occurs excessively during charge and discharge of the battery. Particularly, since the other electrolyte additives may not be sufficiently decomposed at high temperatures when an excessive amount of the other electrolyte additives is added, the other electrolyte additives may be present in the form of an unreacted material or precipitates in the electrolyte at room temperature. Accordingly, a side reaction may occur in which life or resistance characteristics of the secondary battery are degraded.

### Lithium Secondary Battery

The present invention also provides a lithium secondary battery including the non-aqueous electrolyte.

Specifically, the lithium secondary battery includes a positive electrode including a positive electrode active material, a negative electrode including a negative electrode active material, a separator disposed between the positive electrode and the negative electrode, and the above-described non-aqueous electrolyte.

In this case, the lithium secondary battery of the present invention may be prepared according to a typical method known in the art. For example, after an electrode assembly is formed by sequentially stacking a positive electrode, a negative electrode, and a separator between the positive electrode and the negative electrode, the electrode assembly is inserted into a battery case, and the lithium secondary battery may be prepared by injecting the non-aqueous electrolyte according to the present invention.

### (1) Positive Electrode

The positive electrode may be prepared by coating a positive electrode current collector with a positive electrode material mixture slurry including a positive electrode active material, a binder, a conductive agent, and a solvent.

The positive electrode current collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., LiMnO₂, LiMn₂O₄, etc.), lithium-cobalt-based oxide (e.g., LiCoO₂, etc.), lithium-nickel-based oxide (e.g., LiNiO₂, etc.), lithium-nickel-manganese-based oxide (e.g., LiNi_{1-Y}Mn_{Y}O₂ (where 0<Y<1), LiMn_{2-Z}Ni_{Z}O₄ (where 0<Z<2), etc.), lithium-nickel-cobalt-based oxide (e.g., LiNi_{1-Y1}Co_{Y1}O₂ (where 0<Y1<1), etc.), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2), etc.), lithium-nickel-manganese-cobalt-based oxide (e.g., Li(NiₚCo_{q}Mnᵣ₁)O₂ (where 0<p<1, 0<q<1, 0<r1<1, and p+q+r1=1) or Li(Niₚ₁Co_{q1}Mnᵣ₂)O₄ (where 0<p1<2, 0<q1<2, 0<r2<2, and p1+q1+r2=2), etc.), or lithium-nickel-cobalt-transition metal (M) oxide (e.g., Li(Niₚ₂Co_{q2}Mnᵣ₃Mₛ₂)O₂ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and S2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium metal oxide may include LiCoO₂, LiMnO₂, LiNiO₂,lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, etc.),or lithium nickel cobalt aluminum oxide (e.g., LiNi_{0.8}Co_{0.15}Al_{0.05}O₂, etc.), and, in consideration of a significant improvement effect due to the control of types and content ratios of components constituting the lithium composite metal oxide, the lithium composite metal oxide may be Li (Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂, and any one thereof or a mixture of two or more thereof may be used.

Among them, in terms of the fact that the capacity characteristics of the battery may be most improved, a positive active material having a nickel content of 80 atm% or more may be used. For example, the lithium transition metal oxide may include one represented by [Formula 3] below.

[Formula 3] LiₓNiₐCo_{b}M¹_{c}M²_{d}O₂

In Formula 3, M¹ is at least one selected from manganese (Mn) and aluminum (Al), and may be preferably Mn or a combination of Mn and Al.

M² may be at least one selected from the group consisting of zirconium (Zr), boron (B), tungsten (W), magnesium (Mg), cerium (Ce), hafnium (Hf), tantalum (Ta), lanthanum (La), titanium (Ti), strontium (Sr), barium (Ba), fluorine (F), phosphorus (P), and sulfur (S).

x represents an atomic fraction of lithium in the lithium transition metal oxide, wherein x may satisfy 0.90≤x≤1.1, may preferably satisfy 0.95≤x≤1.08, and may more preferably satisfy 1.0≤x≤1.08.

a represents an atomic fraction of nickel among metallic elements excluding lithium in the lithium transition metal oxide, wherein a may satisfy 0.80≤a<1.0, may preferably satisfy 0.80≤a≤0.95, and may more preferably satisfy 0.80≤a≤0.90. In a case in which the amount of the nickel satisfies the above range, high capacity characteristics may be achieved.

b represents an atomic fraction of cobalt among the metallic elements excluding lithium in the lithium transition metal oxide, wherein b may satisfy 0<b<0.2, 0<b≤0.15, or 0.01≤b≤0.10.

c represents an atomic fraction of M¹ among the metallic elements excluding lithium in the lithium transition metal oxide, wherein c may satisfy 0<c<0.2, 0<c≤0.15, or 0.01≤c≤0.10.

d represents an atomic fraction of M² among the metallic elements excluding lithium in the lithium transition metal oxide, wherein d may satisfy 0≤d≤0.1 or 0≤d≤0.05.

The positive electrode active material may be included in an amount of 60 wt% to 99 wt%, preferably 70 wt% to 99 wt%, and more preferably 80 wt% to 98 wt% based on a total weight of solid content in the positive electrode material mixture slurry.

The binder is a component that assists in the binding between the active material and the conductive agent and in the binding with the current collector.

Examples of the binder may be polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene (PE), polypropylene, ethylene-propylene-diene, sulfonated ethylene-propylene-diene,a styrene-butadiene rubber, a fluoro rubber, or various copolymers.

The binder may commonly be included in an amount of 1 wt% to 20 wt%, preferably 1 wt% to 15 wt%, and more preferably 1 wt% to 10 wt% based on the total weight of the solid content in the positive electrode material mixture slurry.

The conductive agent is a component for further improving conductivity of the positive electrode active material.

The conductive agent is a component for further improving the conductivity of the positive electrode active material, wherein it may be added in an amount of 1 wt% to 20 wt% based on the total weight of the solid content in the positive electrode material mixture slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite, artificial graphite, or graphite; conductive fibers such as carbon fibers, carbon nanotubes, or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, preferably 1 wt% to 15 wt%, and more preferably 1 wt% to 10 wt% based on the total weight of the solid content in the positive electrode material mixture slurry.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably 70 wt% to 95 wt%, and more preferably 70 wt% to 90 wt%.

### (2) Negative Electrode

The negative electrode, for example, may be prepared by coating a negative electrode material mixture slurry including a negative electrode active material, a binder, a conductive agent, and a solvent on a negative electrode current collector, or a graphite electrode formed of carbon (C) or a metal itself may be used as the negative electrode.

For example, in a case in which the negative electrode is prepared by coating the negative electrode material mixture slurry on the negative electrode current collector, the negative electrode current collector generally has a thickness of 3 um to 500 um. The negative electrode current collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode current collector, the negative electrode current collector may have fine surface roughness to improve bonding strength with the negative electrode active material, and the negative electrode current collector may be used in various shapes such as a film, a sheet, a foil, a net, a porous body, a foam body, a nonwoven fabric body, and the like.

Also, the negative electrode active material may include at least one selected from the group consisting of lithium metal, a carbon material capable of reversibly intercalating/deintercalating lithium ions, metal or an alloy of lithium and the metal, a metal composite oxide, a material which may be doped and undoped with lithium, and a transition metal oxide.

As the carbon material capable of reversibly intercalating/deintercalating lithium ions, a carbon-based negative electrode active material generally used in a lithium ion secondary battery may be used without particular limitation, and, as a typical example, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature sintered carbon) or hard carbon, mesophase pitch carbide, and fired cokes.

As the metal or the alloy of lithium and the metal, a metal selected from the group consisting of copper (Cu), nickel (Ni), sodium (Na), potassium (K), rubidium (Rb), cesium (Cs), francium (Fr), beryllium (Be), Mg, calcium (Ca), strontium (Sr), silicon (Si), antimony (Sb), lead (Pb), indium (In), zinc (Zn), Ba, radium (Ra), germanium (Ge), Al, and tin (Sn) or an alloy of lithium and the metal may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me: Mn, Fe, Pb, or Ge; Me': Al, B, P, Si, Groups I, II and III elements of the periodic table, or halogen; 0<x≤1; 1≤y≤3; 1≤z≤8) may be used as the metal composite oxide.

The material, which may be doped and undoped with lithium, may include Si, SiOₓ (0<x≤2), a Si-Y alloy (where Y is an element selected from the group consisting of alkali metal, alkaline earth metal, a Group 13 element, a Group 14 element, transition metal, a rare earth element, and a combination thereof, and is not Si), Sn, SnO₂, and Sn-Y (where Y is an element selected from the group consisting of alkali metal, alkaline earth metal, a Group 13 element, a Group 14 element, transition metal, a rare earth element, and a combination thereof, and is not Sn), and a mixture of SiO₂ and at least one thereof may also be used. The element Y may be selected from the group consisting of Mg, Ca, Sr, Ba, Ra, scandium (Sc), yttrium (Y), Ti, Zr, Hf, rutherfordium (Rf), V, niobium (Nb), Ta, dubnium (Db), Cr, Mo, W, seaborgium (Sg), technetium (Tc), rhenium (Re), bohrium (Bh), Fe, Pb, ruthenium (Ru), osmium (Os), hassium (Hs), rhodium (Rh), iridium (Ir), palladium (Pd), platinum (Pt), Cu, silver (Ag), gold (Au), Zn, cadmium (Cd), B,Al, gallium (Ga), Sn, In, Ge, P, arsenic (As), Sb, bismuth (Bi), S, selenium (Se), tellurium (Te), polonium (Po), and a combination thereof.

The transition metal oxide may include lithiumcontaining titanium composite oxide (LTO), vanadium oxide, and lithium vanadium oxide.

The negative electrode active material may be included in an amount of 60 wt% to 99 wt%, preferably 70 wt% to 99 wt%, and more preferably 80 wt% to 98 wt% based on a total weight of solid content in the negative electrode material mixture slurry.

The binder is a component that assists in the binding between the conductive agent, the active material, and the current collector. Examples of the binder may bepolyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene, sulfonated ethylene-propylene-diene,a styrene-butadiene rubber, a fluoro rubber, or various copolymers thereof.

The binder may be commonly included in an amount of 1 wt% to 20 wt%, preferably 1 wt% to 15 wt%, and more preferably 1 wt% to 10 wt% based on the total weight of the solid content in the negative electrode material mixture slurry.

The conductive agent is a component for further improving conductivity of the negative electrode active material, wherein the conductive agent may be added in an amount of 1 wt% to 20 wt% based on the total weight of the solid content in the negative electrode slurry. The conductive agent is not particularly limited as long as it has conductivity without causing adverse chemical changes in the battery, and, for example, a conductive material, such as: carbon powder such as carbon black, acetylene black, Ketjen black, channel black, furnace black, lamp black, or thermal black; graphite powder such as natural graphite, artificial graphite, or graphite; conductive fibers such as carbon nanotubes, carbon fibers, or metal fibers; fluorocarbon powder; conductive powder such as aluminum powder and nickel powder; conductive whiskers such as zinc oxide whiskers and potassium titanate whiskers; conductive metal oxide such as titanium oxide; or polyphenylene derivatives, may be used.

The conductive agent maybe included in an amount of 1 wt% to 20 wt%, preferably 1 wt% to 15 wt%, and more preferably 1 wt% to 10 wt% based on the total weight of the solid content in the negative electrode material mixture slurry.

The solvent may include water or an organic solvent, such as NMP (N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, for example, 70 wt% to 90 wt%.

In a case in which the metal itself is used as the negative electrode, the negative electrode may be a metal thin film itself or may be prepared by a method in which the metal is physically bonded, rolled, or deposited on the negative electrode current collector. As the deposition method, an electrical deposition method or a chemical vapor deposition method for the metal may be used.

For example, the metal thin film itself or the metal to be bonded/rolled/deposited on the negative electrode current collector may include one type of metal selected from the group consisting of lithium (Li), nickel (Ni), tin (Sn), copper (Cu), and indium (In) or an alloy of two types of metals.

### (3) Separator

Also, a conventional porous polymer film typically used as a separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

A shape of the lithium secondary battery of the present invention is not particularly limited, but a cylindrical type using a can, a prismatic type, a pouch type, or a coin type may be used.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention, and such modifications and alterations fall within the scope of claims included herein.

### Examples

### Example 1

### (Preparation of Non-aqueous Electrolyte)

A non-aqueous solvent was prepared by dissolving LiPF₆, vinylene carbonate (VC), 1,3-propane sultone (PS), ethylene sulfate (Esa), and lithium difluorophosphate (LiDFP) in an organic solvent (ethylene carbonate (EC):ethyl methyl carbonate (EMC) = 3:7 volume ratio) such that amounts thereof were 1.0 M, 0.5 wt%, 0.5 wt%, 1.0 wt%, and 0.8 wt%, respectively, and a non-aqueous electrolyte was prepared by adding 0.5 g of 1-trifluoroacetylcoumarin (the compound of Formula 2-1) to 99.5 g of the non-aqueous solvent.

### (Lithium Secondary Battery Preparation)

A positive electrode active material (LiNi_{0.85}Co_{0.05}Mn_{0.07}Al_{0.03}O₂):a conductive agent (carbon nanotubes):a binder(polyvinylidene fluoride) were added in a weight ratio of 98.0:0.7:1.3 to N-methyl-2-pyrrolidone (NMP), as a solvent, to prepare a positive electrode slurry (solid content 76.5 wt%). One surface of a 12µm thick positive electrode current collector (Al thin film)was coated with the positive electrode slurry, dried, and roll-pressed to prepare a positive electrode.

A negative electrode active material (artificial graphite):a conductive agent (carbon black):a binder (styrene-butadiene rubber) were added to distilled water, as a solvent, in a weight ratio of 96.5:1.5:2.0 to prepare a negative electrode slurry (solid content 50 wt%). One surface of an 8um thick negative electrode current collector (Cu thin film) was coated with the negative electrode slurry, dried, and roll-pressed to prepare a negative electrode.

After disposing a polyethylene porous film separator between the above-prepared positive electrode and negative electrode in a dry room, a secondary battery was prepared by injecting the above-prepared non-aqueous electrolyte.

### Example 2

A secondary battery was prepared in the same manner as in Example 1 except that a non-aqueous electrolyte was prepared by adding 1.0 g of 1-trifluoroacetylcoumarin (the compound of Formula 2-1) to 99.0 g of the non-aqueous solvent prepared in Example 1.

### Example 3

A secondary battery was prepared in the same manner as in Example 1 except that a non-aqueous electrolyte was prepared by adding 2.0 g of 1-trifluoroacetylcoumarin (the compound of Formula 2-1) to 98.0 g of the non-aqueous solvent prepared in Example 1.

### Example 4

A secondary battery was prepared in the same manner as in Example 1 except that a non-aqueous electrolyte was prepared by adding 3.0 g of 1-trifluoroacetylcoumarin (the compound of Formula 2-1) to 97.0 g of the non-aqueous solvent prepared in Example 1.

### Comparative Example 1

A secondary battery was prepared in the same manner as in Example 1 except that a non-aqueous electrolyte was prepared by using 100 g of the non-aqueous solvent prepared in Example 1.

### Comparative Example 2

A secondary battery was prepared in the same manner as in Example 1 except that a non-aqueous electrolyte was prepared by adding 0.5 g of 1-trifluorometylcoumarin (compound of Formula A below) to 99.5 g of the non-aqueous solvent prepared in Example 1.

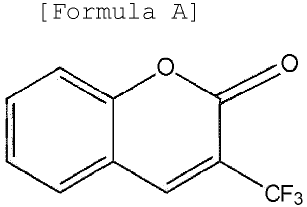

### Comparative Example 3

A secondary battery was prepared in the same manner as in Example 1 except that a non-aqueous electrolyte was prepared by adding 1.0 g of 1-trifluorometylcoumarin (the compound of Formula A) to 99.0 g of the non-aqueous solvent prepared in Example 1.

### Comparative Example 4

A secondary battery was prepared in the same manner as in Example 1 except that a non-aqueous electrolyte was prepared by adding 0.5 g of 1-acetyl coumarin (compound of Formula B below) to 99.5 g of the non-aqueous solvent prepared in Example 1.

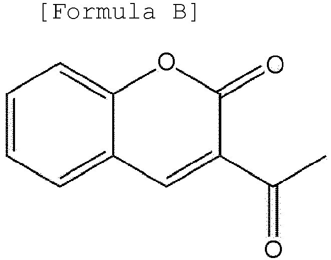

### Experimental Example 1 -Low-temperature Capacity Characteristics Evaluation

Low-temperature capacity characteristics were evaluated for each of the secondary batteries prepared in Examples 1 to 4 and Comparative Examples 1 to 4.

Specifically, each of the batteries prepared in Examples 1 to 4 and Comparative Examples 1 to 4 was charged at a constant current of 0.33 C to 4.2 V at 0°C, and discharged at a constant current of 0.33 C to 3.0V, and a discharge capacity value was then measured to compare low-temperature capacity characteristics. The results thereof are presented in Table 1 below.

**[Table 1]**

| | Low-temperature capacity (mAh) |
|---|---|
| Example 1 | 1978.2 |
| Example 2 | 1971.9 |
| Example 3 | 1923.6 |
| Example 4 | 1883.7 |
| Comparative Example 1 | 1806.0 |
| Comparative Example 2 | 1864.8 |
| Comparative Example 3 | 1854.3 |
| Comparative Example 4 | 1829.1 |

As illustrated in Table 1, it may be confirmed that Examples 1 to 4 using the additive for a non-aqueous electrolyte of the present invention had higher low-temperature discharge capacities than Comparative Examples 1 to 4 in which the additive was not used. This is considered to be because a film having low resistance was formed at a low temperature by the additive for a non-aqueous electrolyte of the present invention.

### Experimental Example 2 -Cycle Characteristics Evaluation

Cycle characteristics were evaluated for each of the secondary batteries prepared in Examples 1 to 4 and Comparative Examples 1 and 4.

Specifically, after charging of each of the batteries prepared in Examples 1 to 4 and Comparative Examples 1 and 4 at a constant current of 0.33 C to 4.2 V at 25°C and discharging of each battery at a constant current of 0.33 C to 3.0 V were set as one cycle and 100 cycles of the charging and discharging were performed, capacity retention relative to initial capacity was calculated by measuring capacity after the cycles. The results thereof are presented in Table 2 below.

**[Table 2]**

| | Capacity retention (%) |
|---|---|
| Example 1 | 94.4 |
| Example 2 | 93.3 |
| Example 3 | 91.7 |
| Example 4 | 90.9 |
| Comparative Example 1 | 89.2 |
| Comparative Example 2 | 90.1 |
| Comparative Example 3 | 89.5 |
| Comparative Example 4 | 89.9 |

As illustrated in Table 2, it may be confirmed that Examples 1 to 4 using the additive for a non-aqueous electrolyte of the present invention had higher capacity retentions than Comparative Examples 1 to 4 in which the additive was not used.

## Claims

1. A non-aqueous electrolyte comprising an additive for a non-aqueous electrolyte which is represented by Formula 1: 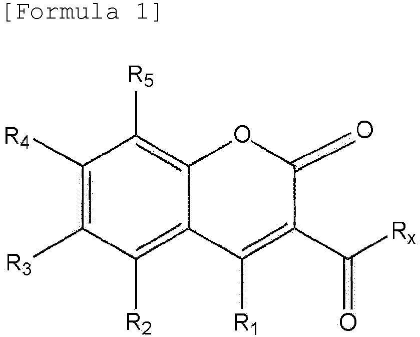
wherein, in Formula 1, R₁ to R₅ are each independently any one selected from the group consisting of hydrogen (H), an alkyl group having 1 to 10 carbon atoms, and an alkoxy group having 1 to 10 carbon atoms, and
Rₓ is an alkyl group having 1 to 10 carbon atoms which is substituted with at least one fluorine group or an alkoxy group having 1 to 10 carbon atoms which is substituted with at least one fluorine group.

2. The non-aqueous electrolyte of claim 1, wherein Rₓ is any one selected from CF₃, an alkyl group having 1 to 9 carbon atoms which is substituted with CF₃, OCF₃, and an alkoxy group having 1 to 9 carbon atoms which is substituted with CF₃.

3. The non-aqueous electrolyte of claim 1, wherein Rₓ is any one selected from CF₃ and an alkyl group having 1 to 4 carbon atoms which is substituted with CF₃.

4. The non-aqueous electrolyte of claim 1, wherein the additive for a non-aqueous electrolyte, which is represented by Formula 1, is an additive for a non-aqueous electrolyte which is represented by Formula 1-1: 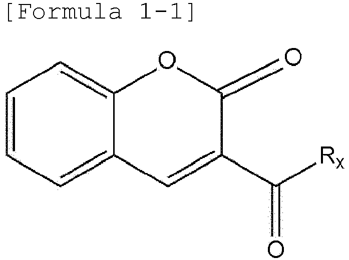 wherein, in Formula 1-1, Rₓ is any one selected from CF₃, an alkyl group having 1 to 9 carbon atoms which is substituted with CF₃, OCF₃, and an alkoxy group having 1 to 9 carbon atoms which is substituted with CF₃.

5. The non-aqueous electrolyte of claim 1, wherein the additive for a non-aqueous electrolyte, which is represented by Formula 1, is any one of compounds represented by Formulae 2-1 to 2-7.

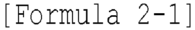

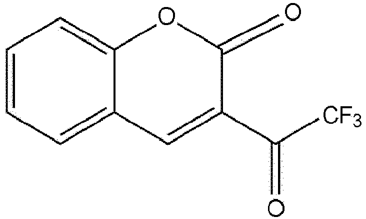

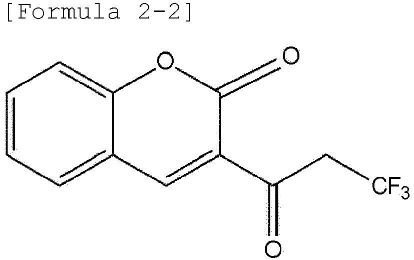

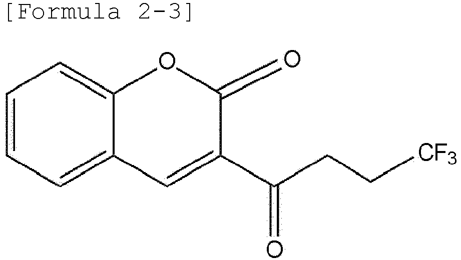

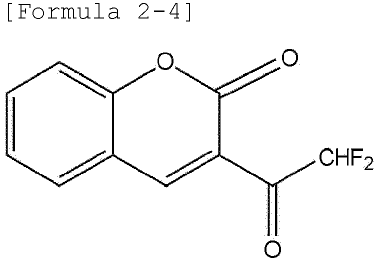

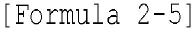

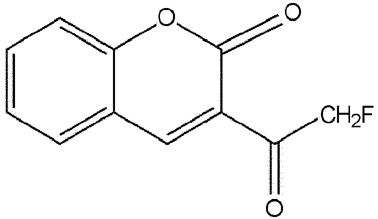

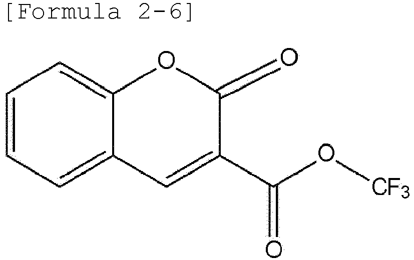

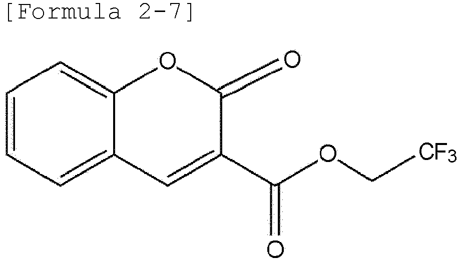

6. The non-aqueous electrolyte of claim 1, wherein the additive for a non-aqueous electrolyte is included in an amount of 0.1 part by weight to 3 parts by weight based on 100 parts by weight of the non-aqueous electrolyte.

7. The non-aqueous electrolyte of claim 1, further comprising a lithium salt and an organic solvent.

8. The non-aqueous electrolyte of claim 7, wherein the lithium salt is at least one selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂, LiN(SO₂CF₂CF₃)₂, and LiN(SO₂CF₃)₂.

9. The non-aqueous electrolyte of claim 7, wherein the lithium salt is included in a concentration of 0.5 M to 5.0 M.

10. The non-aqueous electrolyte of claim 7, wherein the organic solvent comprises at least one organic solvent selected from the group consisting of a cyclic carbonate-based organic solvent, a linear carbonate-based organic solvent, a linear ester-based organic solvent, and a cyclic ester-based organic solvent.

11. A lithium secondary battery comprising the non-aqueous electrolyte of any one of claims 1 to 10.
